# EUROPEAN PATENT APPLICATION

(11) **EP 1 499 081 A2**
(43) Date of publication of application: **19.01.2005**
(21) Application number: 04012801.9
(22) Date of filing: 28.05.2004
(51) Int. Cl.: H04L 27/26

(54) **Multicarrier signal structure**

(30) Priority: 18.07.2003 US 488531 P
(71) Applicant: Broadcom Corporation, Irvine, California 92618-7013 (US)
(72) Inventor: Hansen, Christopher J., Sunnyvale, CA 94087 (US)
(74) Representative: Jehle, Volker Armin, Dipl.-Ing.

(57) **Abstract**

A multicarrier signal structure comprises
a plurality of tones, symmetrically spaced about DC;
a tone spacing of approximately 0.15625 MHz;
wherein at least two tones adjacent to DC are not used, and wherein data that would be carried on such tones is multiplexed with pilot tones.
By not using the tones adjacent to DC, frequency offset and notch filtering problems can be overcome.

## Description

### 1. FIELD OF THE INVENTION

This invention relates generally to wireless local area networks; and more particularly to the interface of wireless devices within such wireless local area networks.

### 2. BACKGROUND OF THE INVENTION

Communication technologies that link electronic devices in a networked fashion are well known. Examples of communication networks include wired packet data networks, wireless packet data networks, wired telephone networks, wireless telephone networks, and satellite communication networks, among other networks. These communication networks typically include a network infrastructure that services a plurality of client devices. The Public Switched Telephone Network (PSTN) is probably the best-known communication network that has been in existence for many years. The Internet is another well-known example of a communication network that has also been in existence for a number of years. These communication networks enable client devices to communicate with each other on a global basis. Wired Local Area Networks (LANs), e.g., Ethernets, are also quite common and support communications between networked computers and other devices within a serviced area. LANs also often link serviced devices to Wide Area Networks and the Internet. Each of these networks is generally considered a "wired" network, even though some of these networks, e.g., the PSTN, may include some transmission paths that are serviced by wireless links.

Wireless networks have been in existence for a relatively shorter period. Cellular telephone networks, wireless LANs (WLANs), and satellite communication networks, among others, are examples of wireless networks. Relatively common forms of WLANs are IEEE 802.11 (a) networks, IEEE 802.11 (b) networks, and IEEE 802.11(g) networks, referred to jointly as "IEEE 802.11 networks." In a typical IEEE 802.11 network, a wired backbone network couples to a plurality of wireless Access Points (APs), each of which supports wireless communications with computers and other wireless terminals that include compatible wireless interfaces within a serviced area. The wired backbone network couples the APs of the IEEE 802.11 network to other networks, both wired and wireless, and allows serviced wireless terminals to communicate with devices external to the IEEE 802.11 network.

WLANs provide significant advantages when servicing portable devices such as portable computers, portable data terminals, and other devices that are not typically stationary and able to access a wired LAN connection. However, WLANs provide relatively low data rate service as compared to wired LANs, e.g., IEEE 802.3 networks. Currently deployed wired networks provide up to one Gigabit/second bandwidth and relatively soon, wired networks will provide up to 10 Gigabit/second bandwidths. However, because of their advantages in servicing portable devices, WLANs are often deployed so that they support wireless communications in a service area that overlays with the service area of a wired network. In such installations, devices that are primarily stationary, e.g., desktop computers, couple to the wired LAN while devices that are primarily mobile, e.g., laptop computers, couple to the WLAN. The laptop computer, however, may also have a wired LAN connection that it uses when docked to obtain relatively higher bandwidth service.

Newer wireless networking standards support relatively greater data rates. For example, the IEEE 802.11(a) standard supports data rates up to 55 Mega Bits Per Second (MBPS) as does the IEEE 802.11(g) standard. The IEEE 802.11(a) uses an Orthogonal Frequency Division Multiplexing (OFDM) physical layer to support this data rate. With the OFDM physical layer, the available spectrum is subdivided into a number of sub-carriers (tones), each of which carries a portion of a demultiplexed data stream. The IEEE 802.11(a) OFDM physical layer includes 48 data carrying tones and 4 pilot tones, with a spacing/width of 0.3125 MHz. However, this tone spacing does not suit all operating conditions and the overall band consumed by the IEEE 802.11(a) physical layer is too wide for some applications.

### BRIEF DESCRIPTION OF THE DRAWINGS

These and other features, aspects and advantages of the present invention will be more fully understood when considered with respect to the following detailed description, appended claims and accompanying drawings wherein:
FIG. 1 is a system diagram illustrating a portion of a premises in which wireless communications are serviced according to the present invention;
FIG. 2 is a schematic block diagram illustrating a wireless device constructed according to the present invention;
FIG. 3 is a table illustrating the characteristics of a physical layer that operates consistently with an embodiment of the present invention; and
FIG. 4 is a graph illustrating the manner in which tones of the physical layer are managed according to an embodiment of the present invention.

### DETAILED DESCRIPTION OF THE DRAWINGS

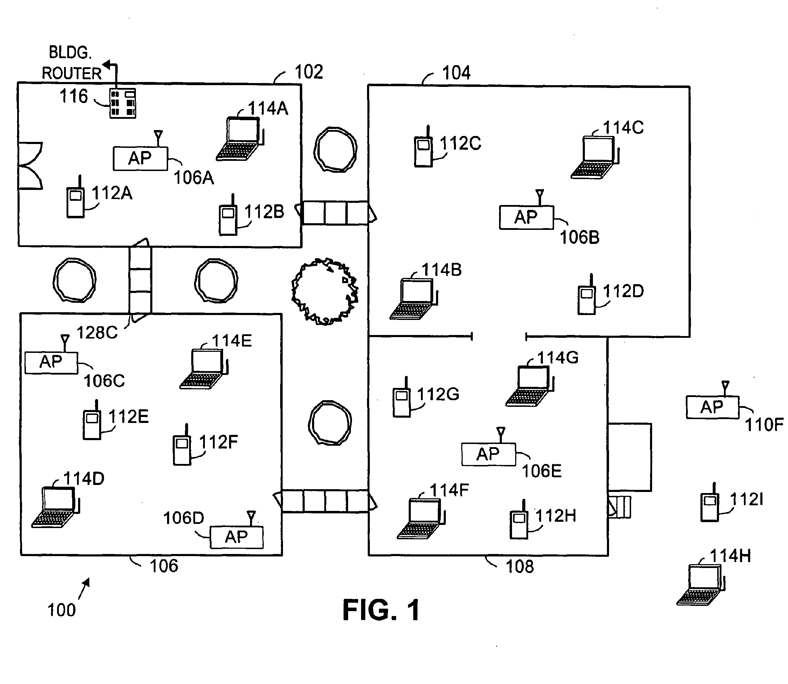

FIG. 1 is a partial system diagram illustrating a portion of a in which wireless communications are serviced according to the present invention. A building floor 100 includes a plurality of rooms 102, 104, 106, and 108. Each of these rooms 102, 104, 106, and 108 has placed therein Access Points (APs) 106A, 106B, 106C, 106D, and 106E, respectively, that service corresponding areas. Further, an external AP 106F services an area external to room 108 of building floor 100. Each of these APs 106A-106F couples to a wired network infrastructure that may include a building router 116.

Serviced within the building floor 100 are wireless telephones/data terminals 112A-112I and laptop computers 114A-114H, together "wireless terminals." Each of these wireless terminals wirelessly communicates with a servicing AP. For example, laptop computer 114A and wireless terminals 112A and 112B wirelessly communicate with AP 106A (in their illustrated positions). Each of the APs 106A-106E supports wireless communications primarily within a designated area respectively. However, the coverage area of each AP 106A-206E extends beyond the boundaries of the serviced rooms 102-108 so that overlapping coverage areas exist. For example, APs 106A and 106C provide service between rooms 102 and 106 so that wireless terminals that roam between the rooms continue to receive wireless communication service when between the rooms 102 and 106. Further, AP 106E supports wireless communications outside of the floor 100 to service laptop computer 114H and wireless terminal 112I.

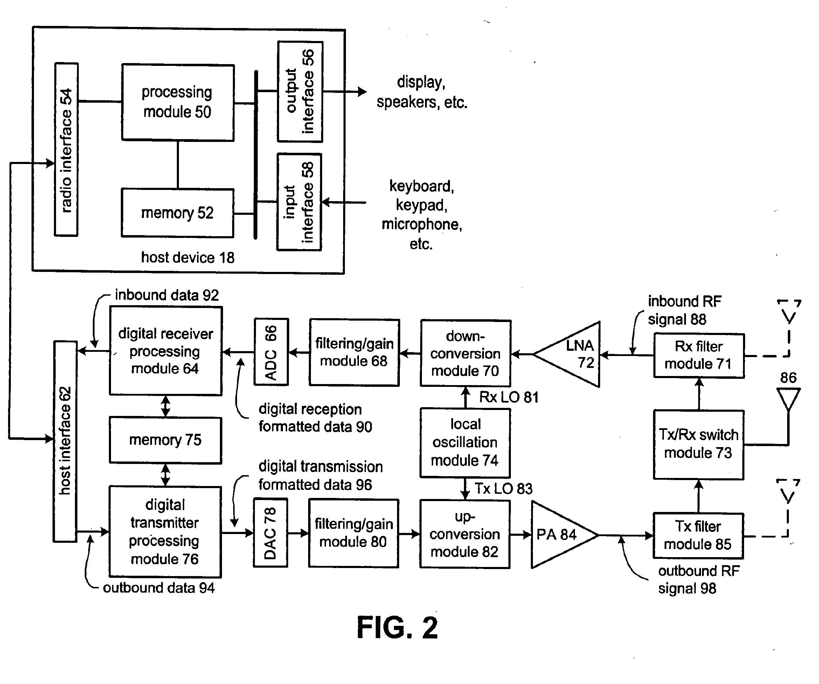

FIG. 2 is a schematic block diagram illustrating a wireless device constructed according to the present invention. FIG. 2 is representative of any of the wireless telephones/data terminals 112A-112I and/or laptop computers 114A-114H of FIG. 1. Functionality is divided between a host device 18 and a radio 60. In the case of laptop computers 114A-114H, the host device 18 is actually the laptop computer and the radio 60 is an expansion card or an expansion device that services the wireless communication needs of the host device 18. In the case the telephones 112A-112I the host device 18 and the radio 60 are both contained within the case of the telephone.

As illustrated, the host device 18 includes a processing module 50, memory 52, radio interface 54, input interface 58, and output interface 56. The processing module 50 and memory 52 execute the corresponding instructions that are typically done by the host device 18. For example, for a telephone host device, the processing module 50 performs the corresponding communication functions in accordance with a particular telephone standard.

The radio interface 54 allows data to be received from and sent to the radio 60. For data received from the radio 60 (e.g., inbound data), the radio interface 54 provides the data to the processing module 50 for further processing and/or routing to the output interface 56. The output interface 56 provides connectivity to an output display device such as a display, monitor, speakers, et cetera such that the received data may be displayed. The radio interface 54 also provides data from the processing module 50 to the radio 60. The processing module 50 may receive the outbound data from an input device such as a keyboard, keypad, microphone, et cetera via the input interface 58 or generate the data itself. For data received via the input interface 58, the processing module 50 may perform a corresponding host function on the data and/or route it to the radio 60 via the radio interface 54.

Radio 60 includes a host interface 62, digital receiver processing module 64, an analog-to-digital converter 66, a filtering/gain module 68, an IF mixing down conversion stage 70, a receiver filter 71, a low noise amplifier 72, a transmitter/receiver switch 73, a local oscillation module 74, memory 75, a digital transmitter processing module 76, a digital-to-analog converter 78, a filtering/gain module 80, an IF mixing up conversion stage 82, a power amplifier 84, a transmitter filter module 85, and an antenna 86. The antenna 86 may be a single antenna that is shared by the transmit and receive paths as regulated by the Tx/Rx switch 73, or may include separate antennas for the transmit path and receive path. The antenna implementation will depend on the particular standard to which the wireless communication device is compliant.

The digital receiver processing module 64 and the digital transmitter processing module 76, in combination with operational instructions stored in memory 75, execute digital receiver functions and digital transmitter functions, respectively. The digital receiver functions include, but are not limited to, digital intermediate frequency to baseband conversion, demodulation, constellation demapping, decoding, and/or descrambling. The digital transmitter functions include, but are not limited to, scrambling, encoding, constellation mapping, modulation, and/or digital baseband to IF conversion. The digital receiver and transmitter processing modules 64 and 76 may be implemented using a shared processing device, individual processing devices, or a plurality of processing devices. Such a processing device may be a microprocessor, microcontroller, digital signal processor, microcomputer, central processing unit, field programmable gate array, programmable logic device, state machine, logic circuitry, analog circuitry, digital circuitry, and/or any device that manipulates signals (analog and/or digital) based on operational instructions.

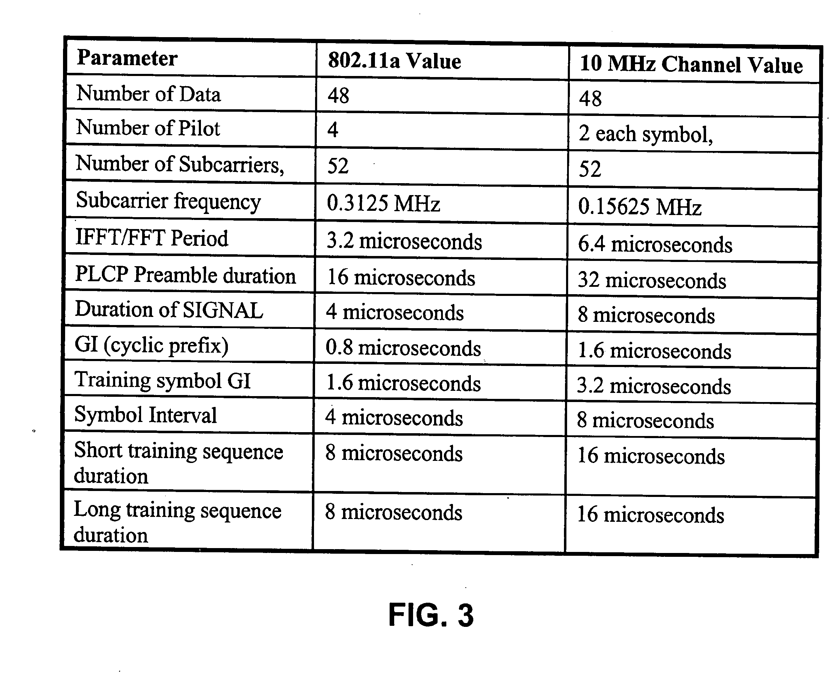

The memory 75 may be a single memory device or a plurality of memory devices. Such a memory device may be a read-only memory, random access memory, volatile memory, nonvolatile memory, static memory, dynamic memory, flash memory, and/or any device that stores digital information. Note that when the processing module 64 and/or 76 implements one or more of its functions via a state machine, analog circuitry, digital circuitry, and/or logic circuitry, the memory storing the corresponding operational instructions is embedded with the circuitry comprising the state machine, analog circuitry, digital circuitry, and/or logic circuitry. The memory 75 stores, and the processing module 64 and/or 76 executes, operational instructions corresponding to at least some of the functions illustrated in Figures 3 - 8.

In operation, the radio 60 receives outbound data 94 from the host device via the host interface 62. The host interface 62 routes the outbound data 94 to the digital transmitter processing module 76, which processes the outbound data 94 in accordance with a particular wireless communication standard (e.g., IEEE 802.11 (a), IEEE 802.11 (b), IEEE 802.11(g), IEEE 802.11(j), Bluetooth, et cetera) to produce digital transmission formatted data 96. The digital transmission formatted data 96 will be a digital base-band signal or a digital low IF signal, where the low IF typically will be in the frequency range of one hundred kilohertz to a few megahertz.

The digital-to-analog converter 78 converts the digital transmission formatted data 96 from the digital domain to the analog domain. The filtering/gain module 80 filters and/or adjusts the gain of the analog signal prior to providing it to the IF mixing stage 82. The IF mixing stage 82 directly converts the analog baseband or low IF signal into an RF signal based on a transmitter local oscillation 83 provided by local oscillation module 74. The power amplifier 84 amplifies the RF signal to produce outbound RF signal 98, which is filtered by the transmitter filter module 85. The antenna 86 transmits the outbound RF signal 98 to a targeted device such as a base station, an access point and/or another wireless communication device.

The radio 60 also receives an inbound RF signal 88 via the antenna 86, which was transmitted by a base station, an access point, or another wireless communication device. The antenna 86 provides the inbound RF signal 88 to the receiver filter module 71 via the Tx/Rx switch 77, where the Rx filter 71 bandpass filters the inbound RF signal 88. The Rx filter 71 provides the filtered RF signal to low noise amplifier 72, which amplifies the signal 88 to produce an amplified inbound RF signal. The low noise amplifier 72 provides the amplified inbound RF signal to the IF mixing module 70, which directly converts the amplified inbound RF signal into an inbound low IF signal or baseband signal based on a receiver local oscillation 81 provided by local oscillation module 74. The down conversion module 70 provides the inbound low IF signal or baseband signal to the filtering/gain module 68. The filtering/gain module 68 filters and/or gains the inbound low IF signal or the inbound baseband signal to produce a filtered inbound signal.

The analog-to-digital converter 66 converts the filtered inbound signal from the analog domain to the digital domain to produce digital reception formatted data 90. The digital receiver processing module 64 decodes, descrambles, demaps, and/or demodulates the digital reception formatted data 90 to recapture inbound data 92 in accordance with the particular wireless communication standard being implemented by radio 60. The host interface 62 provides the recaptured inbound data 92 to the host device 18 via the radio interface 54.

The wireless communication device of figure 2 may be implemented using one or more integrated circuits. For example, the host device 18 may be implemented on one integrated circuit, the digital receiver processing module 64, the digital transmitter processing module 76 and memory 75 may be implemented on a second integrated circuit, and the remaining components of the radio 60, less the antenna 86, may be implemented on a third integrated circuit. As an alternate example, the radio 60 may be implemented on a single integrated circuit. As yet another example, the processing module 50 of the host device and the digital receiver and transmitter processing modules 64 and 76 may be a common processing device implemented on a single integrated circuit. Further, the memory 52 and memory 75 may be implemented on a single integrated circuit and/or on the same integrated circuit as the common processing modules of processing module 50 and the digital receiver and transmitter processing module 64 and 76.

FIG. 3 is a table illustrating the characteristics of a physical layer that operates consistently with an embodiment of the present invention. The physical layer of the present invention resides within a 10 MHz channel and is OFDM based. It has many similarities to the IEEE 802.11 (a) physical layer and with some differences. FIG. 3 compares the physical layer o the 10 MHz OFDM physical layer of the present invention to the IEEE 802.11 (a) physical layer. The 10 MHz OFDM physical layer of the present invention may operate in various frequency bands including the bands of 4.9-5.0 GHz and 5.03-5.091 GHz. The physical layer operates such that it has a maximum range of 3 Km, a maximum licensed transmit power of 250 mw; 2500 mw EIRP, and a maximum unlicensed transmit power of 100 mw.

Path Loss (obstructed channel) model for the physical layer is described by: *L*(*d*) = *L*(*d*₀) + 10*n*log₁₀(*d*/*d*₀) + *X*_{σ} where *d*₀ = 1; *L*(*d*₀) = 46.6*dB*; *n* = 2.58;σ = 9.31 with a typical value at 500 m of 116 dB +/- 9.3 dB. The delay spread for the physical layer has a mean of mean of 275.9 ns and a standard deviation of 352 ns. Because the physical layer has a longer delay spread than the IEEE 802.11(a) physical layer (500 nS delay spread channel), a guard interval (cyclic prefix) is required. Further, because the physical layer has a greater path loss than the IEEE 802.11(a) physical layer, a receiver supporting the physical layer needs improved sensitivity.

As contrasted to the IEEE 802.11(a) physical layer, with the receiver bandwidth reduced by a factor of 2, the SNR of the physical layer is improved by 3 dB. The length of the guard interval (cyclical prefix) is doubled to 1.6 microseconds. The symbol length is doubled to maintain the same amount of guard interval overhead as IEEE 802.11(a). A 64 point Fast Fourier Transform (FIT) may also be used with the physical layer, as it is used with the IEEE 802.11(a) physical layer.

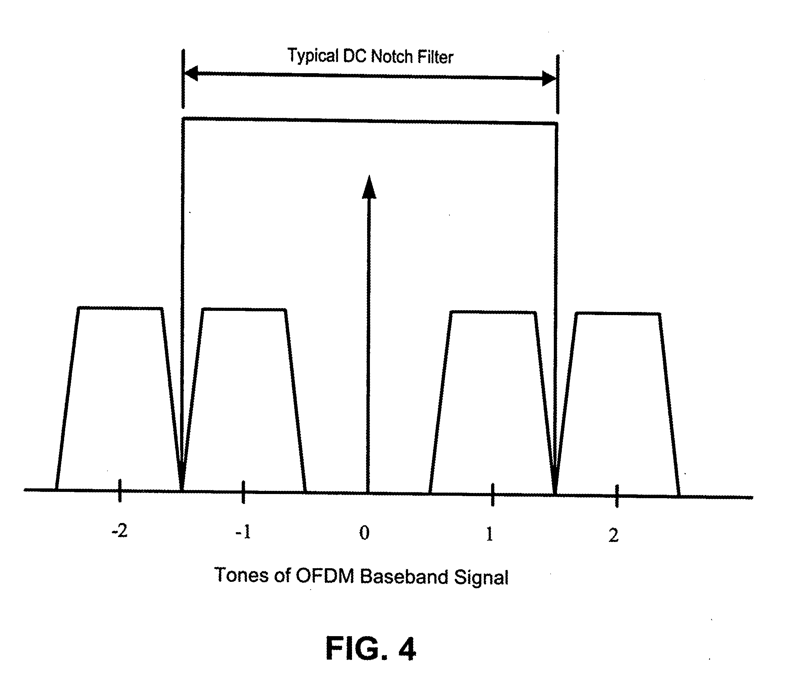

FIG. 4 is a graph illustrating the manner in which tones of the physical layer are managed according to an embodiment of the present invention. Because the bandwidth of the physical layer is reduced (as compared to the bandwidth of the IEEE 802.11(a) physical layer), the center tones, tone -1 and tone +1 are nearer DC. Many receiver designs incorporate a notch filter at DC. Normal frequency offset between supported mobile terminals effectively moves this notch away from DC. With the closer tone spacing, the effect of frequency offset is more severe. In a most severe operating condition, frequency offset may cause the notch filter to remove a portion of either tone -1 or tone +1.

Thus, according to the present invention, the inner two data sub-carriers (tone -1 and tone +1) are removed/not used to accommodate the frequency offsets. Data that is specified to be carried on tones -1 and +1 by the IEEE 802.11(a) physical layer is moved to tones -21, -7, 7, and 21 such that it is alternated with the pilots on these sub-carriers. With this modification, the physical layer includes a dead zone width of 407.28 KHz + the receiver Notch Bandwidth.

In one operation, the physical layer alternates the tones used according to k = symbol index mod 6 (starting from SIGNAL symbol as zero):
- k = 0; data on tones {-21, -7} k = 1; {-21, 7}
- k = 2; {-21, 21} k = 3; {-7,7}
- k = 4; {-7, 21} k = 5; {7, 21}

This solution maintains frequency diversity of pilots. Further, Short and Long training symbols are generated the same way as in IEEE 802.11 (a) section 17.3.3, except time period for IFFT is lengthened by a factor of 2. PHY rates of 3, 4.5, 6, 9, 12, 18, 24, 27 Mbps are supported.

These longer symbol times and air propagation times require MAC timing changes (as compared to the IEEE 802.11(a) physical layer. These timing changes are summarized by:
- aCCATime increases from 4 to 8 microseconds
- aAirPropagationTime increases from « 1 microsecond to 2 microseconds
- aSlotTIME = 14 microseconds
- aSIFSTIME = 16 microseconds (no change)
- PIFS = 30 microseconds (SIFS + SLOT)
- DIFS = 44 microseconds (SIFS + 2*SLOT)

The invention disclosed herein is susceptible to various modifications and alternative forms. Specific embodiments therefore have been shown by way of example in the drawings and detailed description. It should be understood, however, that the drawings and description thereto are not intended to limit the invention to the particular form disclosed, but on the contrary, the invention is to cover all modifications, equivalents and alternatives falling within the spirit and scope of the present invention as defined by the claims.

## Claims

1. An Orthogonal Frequency Division Multiplex (OFDM) baseband physical layer comprising:
a plurality of tones symmetrically spaced about DC;
a tone spacing of approximately 0.15625 MHz;
wherein at least two tones adjacent DC are not used, and wherein data that would be carried on such tones is multiplexed with pilot tones on other of the plurality of tones; and
wherein by not using the at least two tones adjacent DC, frequency offset and notch filtering problems are overcome.

2. The OFDM baseband physical layer of claim 1, wherein the physical layer alternates the tones used to carry the data that would otherwise be carried on two tones adjacent DC according to k = symbol index mod 6 (starting from SIGNAL symbol as zero):
k = 0; data on tones {-21, -7};
k = 1; data on tones {-21, 7};
k = 2; data on tones {-21, 21};
k = 3; data on tones {-7,7};
k = 4; data on tones {-7, 21}; and
k = 5; data on tones {7, 21}.

3. The OFDM baseband physical layer of claim 1, wherein the receiver bandwidth is reduced by a factor of two and the SNR of the physical layer is improved by 3 dB as compared to the IEEE 802.11(a) physical layer.

4. The OFDM baseband physical layer of claim 1, wherein the length of the guard interval (cyclical prefix) is doubled to 1.6 microseconds as compared to the IEEE 802.11(a) physical layer.

5. The OFDM baseband physical layer of claim 1, wherein the symbol length is doubled to maintain the same amount of guard interval overhead as the IEEE 802.11 (a) physical layer.

6. The OFDM baseband physical layer of claim 1, wherein a 64 point Fast Fourier Transform (FFT) is used with the physical layer.
